# EUROPEAN PATENT APPLICATION

(11) **EP 3 086 000 A1**
(43) Date of publication of application: **26.10.2016**
(21) Application number: 16166646.6
(22) Date of filing: 22.04.2016
(51) Int. Cl.: F16H 61/04, B60W 10/06, B60W 10/11, B60W 30/19, F16H 3/66

(54) **CONTROL APPARATUS FOR VEHICLE**

(30) Priority: 24.04.2015 JP 2015088967
(71) Applicant: Toyota Jidosha Kabushiki Kaisha, Toyota-shi, Aichi-ken, 471-8571 (JP)
(72) Inventor: KUWAHARA, Seiji, TOYOTA-SHI, AICHI-KEN 471-8571 (JP); HOSHIYA, Kazumi, TOYOTA-SHI, AICHI-KEN 471-8571 (JP); ASAHARA, Norimi, TOYOTA-SHI, AICHI-KEN 471-8571 (JP); ITO, Yoshio, TOYOTA-SHI, AICHI-KEN 471-8571 (JP); ENDO, Takahito, TOYOTA-SHI, AICHI-KEN 471-8571 (JP); FUJIYOSHI, Tadashi, TOYOTA-SHI, AICHI-KEN 471-8571 (JP)
(74) Representative: Intès, Didier Gérard André

(57) **Abstract**

The disclosure relates to a control apparatus for a vehicle. The vehicle includes an engine (2), and a transmission (3) that is coupled to the engine (2). The control apparatus includes an ECU (25). The ECU (25) is configured to change a speed ratio of the transmission (3) without driver intervention when an automatic operation mode is selected, and change the speed ratio of the transmission (3) as a result of driver intervention when a manual operation mode is selected. The automatic operation mode and the manual operation mode are selected by the driver. The ECU (25) executes shifting limit control based on selection of the automatic operation mode. The shifting limit control is control for reducing a shock resulting from the changing of the speed ratio of the transmission (3).

## Description

### 1. Field of the Disclosure

This disclosure relates to a control apparatus for a vehicle that can changeover between a manual operation mode that is configured to carry out shifting as a result of driver intervention, and an automatic operation mode that is configured to carry out shifting based on a running environment, a running state or the like without driver intervention.

### 2. Description of Related Art

In Japanese Patent Application Publication No. 2013-119875 (JP 2013-119875 A), there is described a shifting control apparatus that is configured to carry out shifting in conformity with the intention of a driver by determining, based on an amount of operation of an accelerator by the driver, whether or not the driver requests that a swift downshift be performed. With this shifting control apparatus, when the amount of operation of the accelerator by the driver is smaller than a threshold set in advance, it is determined that the driver does not request that a swift downshift be performed. In this case, with a view to suppressing the occurrence of a shock resulting from shifting, the shifting control apparatus is configured such that a clutch provided between an engine and a transmission is temporarily released, and that a downshift is performed in this state. On the contrary, when the amount of operation of the accelerator by the driver is equal to or larger than the threshold set in advance, it is determined that the driver requests that a swift downshift be performed, and the shifting control apparatus is configured to perform a downshift while keeping the aforementioned clutch engaged.

### SUMMARY OF THE DISCLOSURE

By the way, with a vehicle that is configured to allow selection of an automatic operation mode in which shifting is carried out without driver intervention and a manual operation mode in which shifting is carried out as a result of driver intervention, the level of tolerance to changes in the behavior of the vehicle is lower when the automatic operation mode is selected than when the manual operation mode is selected. This is because the behavior of the vehicle changes independently of the intention of the driver in the automatic operation mode. Accordingly, if a shock occurs as a result of shifting or the like when the automatic operation mode is selected, the driver may develop a feeling of discomfort.

This disclosure provides a control apparatus for a vehicle that can suppress the occurrence of a shock that is not expected by a driver when an automatic operation mode is selected.

An aspect of the disclosure relates to a control apparatus for a vehicle. The vehicle includes an engine, and a transmission that is coupled to the engine. The control apparatus includes an ECU. The ECU is configured to change a speed ratio of the transmission without driver intervention when an automatic operation mode is selected, and change the speed ratio of the transmission as a result of driver intervention when a manual operation mode is selected. The automatic operation mode and the manual operation mode are selected by the driver. The ECU executes shifting limit control based on selection of the automatic operation mode. The shifting limit control is control for reducing a shock resulting from the changing of the speed ratio of the transmission.

In the aforementioned aspect of the disclosure, the ECU may be configured to execute the shifting limit control by making a rate of change in a first driving force lower than a rate of change in a second driving force. The rate of change in the first driving force is a rate of change in a driving force resulting from the changing of the speed ratio of the transmission. The rate of change in the second driving force is a rate of change in the driving force resulting from the changing of the speed ratio of the transmission at a time when the manual operation mode is selected.

In the aforementioned aspect of the disclosure, the ECU may be configured to execute the shifting limit control by making a first time longer than a second time. The first time is a time that is needed to change the speed ratio of the transmission. The second time is a time that is needed to change the speed ratio of the transmission when the manual operation mode is selected.

In the aforementioned aspect of the disclosure, the transmission may include a plurality of engagement devices. The plurality of engagement devices change a transmitted torque capacity. The ECU may be configured to change the speed ratio of the transmission by controlling a transmitted torque capacity of a first engagement device. The first engagement device is at least one of the plurality of the engagement devices. The ECU may be configured to execute the shifting limit control by making a rate of change in a first transmitted torque capacity lower than a rate of change in a second transmitted torque capacity. The rate of change in the first transmitted torque capacity is a rate of change in the transmitted torque capacity of the first engagement device in changing the speed ratio of the transmission. The rate of change in the second transmitted torque capacity is a rate of change in the transmitted torque capacity of the first engagement device in changing the speed ratio of the transmission with the manual operation mode selected.

In the aforementioned aspect of the disclosure, the ECU may be configured to execute the shifting limit control by making an amount of change in the first driving force smaller than an amount of change in the second driving force. The amount of change in the first driving force is an amount of change in the driving force in changing the speed ratio of the transmission. The amount of change in the second driving force is an amount of change in the driving force in changing the speed ratio of the transmission with the manual operation mode selected.

In the aforementioned aspect of the disclosure, the ECU may be configured to execute the shifting limit control by making a first output torque of the engine larger than a second output torque of the engine, and making a third output torque of the engine smaller than a fourth output torque of the engine. The first output torque is an output torque of the engine in a process of performing an upshift for reducing the speed ratio of the transmission with the automatic operation mode selected. The second output torque is an output torque of the engine in a process of performing the upshift with the manual operation mode selected. The third output torque is an output torque of the engine in a process of performing a downshift for increasing the speed ratio of the transmission with the automatic operation mode selected. The fourth output torque is an output torque of the engine in a process of performing the downshift with the manual operation mode selected.

In the aforementioned aspect of the disclosure, the ECU may be configured to make a determination on the performance of a downshift for increasing the speed ratio of the transmission based on a rotational speed of the engine, and execute the shifting limit control by setting a first rotational speed of the engine lower than a second rotational speed of the engine. The first rotational speed is a rotational speed of the engine for making a determination on the performance of the downshift with the automatic operation mode selected. The second rotational speed is a rotational speed of the engine for making a determination on the performance of the downshift with the manual operation mode selected.

In the aforementioned aspect of the disclosure, the transmission may include a torque converter and a second engagement device. The torque converter is provided between the engine and a driving wheel, and transmits an output torque of the engine to the driving wheel via a working fluid. The second engagement device is engaged to transmit the output torque of the engine to the driving wheel without the intervention of the torque converter. The ECU may be configured to make a changeover between engagement and release of the second engagement device based on a vehicle speed and a required driving force, and execute the shifting limit control by making a changeover between the engagement and the release of the second engagement device at a higher vehicle speed than when the manual operation mode is selected.

In the aforementioned aspect of the disclosure, the transmission may include a torque converter and a third engagement device. The torque converter is provided between the engine and a driving wheel, and transmits an output torque of the engine to the driving wheel via a working fluid. The third engagement device is engaged to transmit the output torque of the engine to the driving wheel without the intervention of the torque converter. The ECU may be configured to change a transmitted torque capacity of the third engagement device based on a vehicle speed and a required driving force, and execute the shifting limit control by making a third transmitted torque capacity lower than a fourth transmitted torque capacity. The third transmitted torque capacity is a transmitted torque capacity of the third engagement device in a process of changing the speed ratio of the transmission. The fourth transmitted torque capacity is a transmitted torque capacity of the third engagement device in a process of changing the speed ratio of the transmission with the manual operation mode selected.

In the aforementioned aspect of the disclosure, the ECU may be configured to change the speed ratio of the transmission in accordance with a required driving force, and execute the shifting limit control by reducing a threshold of the required driving force for a predetermined time set in advance after performing a downshift for increasing the speed ratio of the transmission. The threshold is a threshold for making a determination on the performance of an upshift for reducing the speed ratio of the transmission.

In the aforementioned aspect of the disclosure, the ECU may be configured to predict a speed ratio required of the transmission after a predetermined time, and execute the shifting limit control by refraining from performing an upshift for reducing the speed ratio of the transmission even when it is determined that the upshift should be performed before the lapse of the predetermined time when the predicted speed ratio is a currently set speed ratio.

According to the aspect of the disclosure, the shifting limit control is executed based on selection of the automatic operation mode. The shifting limit control reduces a shock resulting from the changing of the speed ratio of the transmission. Therefore, even when the speed ratio of the transmission is changed without driver intervention, the occurrence of a shock that is not expected by the driver can be reduced or eliminated, so driver discomfort can be reduced.

### BRIEF DESCRIPTION OF THE DRAWINGS

Features, advantages, and technical and industrial significance of an exemplary embodiment of the disclosure will be described below with reference to the accompanying drawings, in which like numerals denote like elements, and wherein:
FIG. 1 is a flowchart for illustrating an example of control of a control apparatus according to this disclosure;
FIG. 2 includes time charts for illustrating an example in which the oil pressure of an engagement device is controlled such that the time needed for shifting becomes long so as to reduce the rate of change in driving force resulting from an upshift;
FIG. 3 includes time charts for illustrating an example in which the oil pressure of the engagement devices is controlled such that the time needed for shifting becomes long so as to reduce the rate of change in driving force resulting from a downshift;
FIG 4 includes time charts for illustrating an example in which the output torque of an engine is controlled so as to reduce the rate of change in driving force resulting from an upshift;
FIG. 5 includes time charts for illustrating an example in which the output torque of the engine is controlled so as to reduce the rate of change in driving force resulting from a downshift;
FIG. 6 includes time charts for illustrating an example in which a determination on the start of coast-down is changed;
FIG 7 is a flowchart for illustrating a control example of a torque converter clutch when an automatic operation mode is selected;
FIG 8 is a map for controlling the torque converter clutch;
FIG 9 includes time charts for illustrating an example in which the slip amount of the torque converter clutch is increased at the time of an upshift;
FIG 10 includes time charts for illustrating an example in which the slip amount of the torque converter clutch is increased at the time of a downshift;
FIG. 11 is a flowchart for illustrating a control example in which the speed ratio is restrained from being frequently changed when the automatic operation mode is selected;
FIG. 12 is a map for illustrating an example in which the threshold for making a determination on an upshift is changed;
FIG 13 is a skeleton diagram for illustrating an exemplary vehicle to which embodiments of this disclosure can be applied; and
FIG 14 is a chart showing engagement mechanisms to be engaged to set respective shift speeds.

### DETAILED DESCRIPTION OF EMBODIMENT

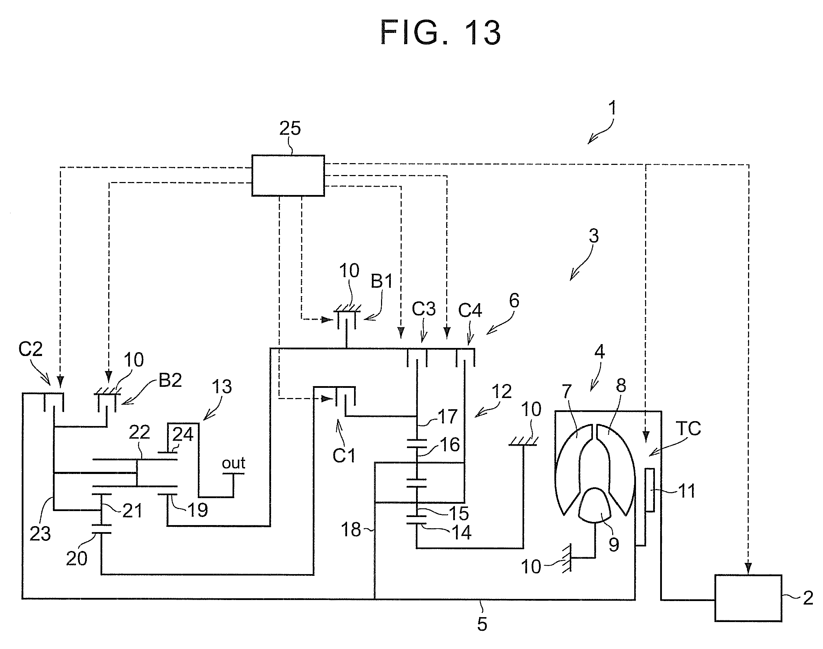

FIG. 13 shows an exemplary vehicle to which embodiments of this disclosure can be applied. A vehicle 1 shown in FIG. 13 is equipped with an engine 2, and a transmission 3 that changes an output torque of the engine 2 and outputs the changed output torque toward driving wheels (not shown). This transmission 3 is composed of a torque converter 4 and a stepped transmission 6. The torque converter 4 is configured to transmit a torque via a working fluid, and amplify and output a torque input from the engine 2. The stepped transmission 6 is coupled to an output shaft 5 of the torque converter 4 (hereinafter referred to as a turbine shaft). A torque converter clutch TC is provided in parallel with the torque converter 4 such that a torque can be transmitted to the stepped transmission 6 without amplifying the output torque of the engine 2.

This torque converter 4 is configured in the same manner as conventionally known ones, and is equipped with a pump impeller 7 that is coupled to the engine 2, and a turbine runner 8 that is opposed to the pump impeller 7. The working fluid is supplied into a housing that accommodates the torque converter 4. Accordingly, when the pump impeller 7 rotates, the working fluid flows toward the turbine runner 8. A stator 9 that adjusts the flow direction of the working fluid is provided between the pump impeller 7 and the turbine runner 8. This stator 9 is coupled to a fixed portion 10 such as a case or the like via a one-way clutch (not shown). The one-way clutch is configured to be engaged in a so-called converter region, namely, a region where the rotational speed of the pump impeller 7 is higher than the rotational speed of the turbine runner 8. Then, the turbine runner 8 is coupled to the turbine shaft 5.

When the torque is transmitted via the working fluid as described above, the transmission efficiency of torque inevitably decreases. When the rotational speed of the turbine runner 8 becomes higher than the rotational speed of the pump impeller 7, the working fluid may apply a load in such a direction as to hinder rotation of the turbine runner 8. Therefore, a torque converter clutch TC is provided such that the engine 2 and the turbine shaft 5 rotate integrally with each other. This torque converter clutch TC is configured in the same manner as conventionally known ones, and is a circular disc-like member with a friction plate 11 integrated with a face opposed to a front cover of the housing that accommodates the torque converter 4. The torque converter clutch TC is configured to couple the engine 2 and the turbine shaft 5 to each other by engaging the friction plate 11 and the front cover with each other. The torque converter clutch TC is configured such that the transmitted torque capacity thereof is changed in accordance with the difference between the oil pressure supplied to one lateral face thereof and the oil pressure supplied to the other lateral face thereof.

The aforementioned stepped transmission 6 has a conventionally known double pinion-type planetary gear mechanism (hereinafter referred to as a first planetary gear mechanism) 12, and a Ravigneaux-type planetary gear mechanism (hereinafter referred to as a second planetary gear mechanism) 13. The first planetary gear mechanism 12 is composed of a first sun gear 14 that is coupled to the fixed portion 10, a first inner pinion gear 15 that meshes with the first sun gear 14, a first outer pinion gear 16 that meshes with the first inner pinion gear 15, a first ring gear 17 that meshes with the first outer pinion gear 16, and a first carrier 18 that holds the first inner pinion gear 15 and the first outer pinion gear 16 such that the first inner pinion gear 15 and the first outer pinion gear 16 can rotate around themselves and around the first carrier 18, and that is coupled to the turbine shaft 5. That is, the first planetary gear mechanism 12 is a differential mechanism that has three rotary elements and that is configured such that the first carrier 18, the first sun gear 14 and the first ring gear 17 function as an input element, a reactive element and an output element respectively when the engine 2 outputs a driving force. The first sun gear 14 is coupled to the fixed portion 10 as described above, so the first planetary gear mechanism 12 functions as a speed reducer.

The second planetary gear mechanism 13 is constituted of a second sun gear 19 and a third sun gear 20 that are arranged concentrically with the turbine shaft 5, a second inner pinion gear 21 that meshes with the third sun gear 20, a second outer pinion gear 22 that meshes with the second inner pinion gear 21 and the second sun gear 19, a second carrier 23 that holds the second inner pinion gear 21 and the second outer pinion gear 22 such that the second inner pinion gear 21 and the second outer pinion gear 22 can rotate around themselves and around the second carrier 23, and a second ring gear 24 that meshes with the second outer pinion gear 22. That is, the second planetary gear mechanism 13 is configured to share two rotary elements, namely, a single pinion-type planetary gear mechanism and a double pinion-type planetary gear mechanism. The second planetary gear mechanism 13 is a differential mechanism having four rotary elements, namely, the second sun gear 19, the third sun gear 20, the second carrier 23, and the second ring gear 24.

Furthermore, a plurality of clutches that selectively engage the respective rotary elements of the first planetary gear mechanism 12 and the respective rotary elements of the second planetary gear mechanism 13, and brakes that stop certain ones of the rotary elements are provided. In concrete terms, a first clutch C1 that couples the first ring gear 17 and the third sun gear 20 to each other is provided, a second clutch C2 that couples the turbine shaft 5 or the first carrier 18 and the second carrier 23 to each other is provided, a third clutch C3 that couples the first ring gear 17 and the second sun gear 19 to each other is provided, and a fourth clutch C4 that couples the first carrier 18 and the second sun gear 19 to each other is provided. A first brake B1 that stops the second sun gear 19 is provided by coupling the second sun gear 19 to the fixed portion 10. By the same token, a second brake B2 that stops the second carrier 23 is provided by coupling the second carrier 23 to the fixed portion 10. These respective clutches C1, C2, C3 and C4 and these respective brakes B1 and B2 are configured in the same manner as conventionally known frictional engagement devices, and are configured such that the transmitted torque capacity thereof can be changed based on the controlled variable of a hydraulic actuator. Incidentally, the transmitted torque capacity of each of the clutches C1, C2, C3 and C4 and each of the brakes B1 and B2 may be controlled by an electromagnetic actuator, and the means for controlling the transmitted torque capacity is not limited. A conventionally known one-way clutch may be provided in parallel with the second brake B2.

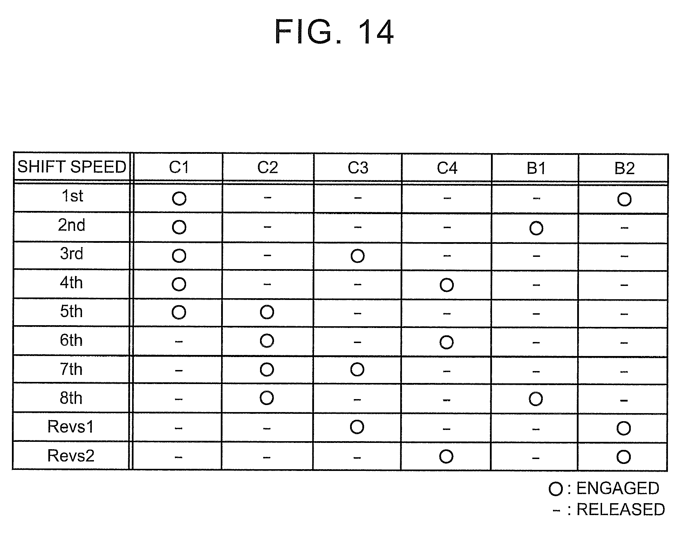

Engagement mechanisms to be engaged in setting respective shift speeds are shown in an engagement chart of FIG. 14. Incidentally, in FIG. 14, "O" indicates a state in which a clutch or a brake is engaged, and "-" indicates a state in which a clutch or a brake is released. As shown in FIG. 14, a first forward speed is set by engaging the first clutch C1 and the second brake B2 with each other. A second forward speed is set by engaging the first clutch C1 and the first brake B1 with each other. A third forward speed is set by engaging the first clutch C1 and the third clutch C3 with each other. A fourth forward speed is set by engaging the first clutch C1 and the fourth clutch C4 with each other. A fifth forward speed is set by engaging the first clutch C1 and the second clutch C2 with each other. A sixth forward speed is set by engaging the second clutch C2 and the fourth clutch C4 with each other. A seventh forward speed is set by engaging the second clutch C2 and the third clutch C3 with each other. An eighth forward speed is set by engaging the second clutch C2 and the first brake B1 with each other. A first reverse speed is set by engaging the second brake B2 and the third clutch C3 with each other. A second reverse speed is set by engaging the second brake B2 and the fourth clutch C4 with each other.

According to this configuration, the speed ratio in setting the first forward speed is the largest, the speed ratio in setting the eighth forward speed is the smallest, and the speed ratio in setting the sixth forward speed is "1".

This vehicle 1 is configured such that a manual operation mode for changing the speed ratio of the transmission 3 (hereinafter referred to simply as shifting) as a result of driver intervention and an automatic operation mode for carrying out shifting in accordance with the situation outside the vehicle 1 such as a running environment or the like, a running state of the vehicle 1 and the like without driver intervention can be selected through the operation of a switch (not shown) or the like by the driver.

There is adopted a configuration in which the speed ratio of the transmission 3 is set based on an accelerator opening degree (a required driving force) and a vehicle speed as is conventionally known when the manual operation mode is selected. On the other hand, when the automatic operation mode is selected, a route along which the host vehicle is to run, a vehicle speed in running along the route, and a time of passage on the route and the like are first planned in accordance with static obstacles such as buildings and the like, dynamic obstacles such as pedestrians, surrounding vehicles or the like, or gradients of running road surfaces and the like. A required driving force and a required braking force are set in accordance with the planned route, the planned vehicle speed and the like. According to this configuration, a throttle opening degree of the engine 2 is then set in accordance with the required driving force thus set or the like, and a speed ratio of the transmission 3 is set based on the throttle opening degree and the vehicle speed. That is, although the manual operation mode and the automatic operation mode are different from each other in the method of obtaining the required driving force, there is adopted a configuration in which the speed ratio of the transmission 3 is set based on the required driving force and the vehicle speed.

The shifting control as described above is configured to be executed by an electronic control unit (hereinafter referred to as an ECU) 25. This ECU 25 is designed to control the engine 2, the respective engagement devices C1, C2, C3, C4, B1 and B2 or the torque converter clutch TC and the like. In other words, the ECU 25 is designed to control the speed ratio of the transmission 3, and is mainly constituted of a microcomputer as is the case with conventionally known ones. Signals are input to the ECU 25 from sensors (not shown). The ECU 25 is configured to output signals to the engine 2, the respective engagement devices C1, C2, C3, C4, B1 and B2 and/or the torque converter clutch TC and the like based on the input signals, maps stored in advance, arithmetic expressions and the like. As an example, a vehicle speed that is detected by a vehicle speed sensor, an accelerator opening degree that is detected by an accelerator opening degree sensor, a signal that is detected by a sensor such as a millimeter wave radar or the like for detecting an outside situation, a signal of a switch for making a changeover between the aforementioned operation modes, and the like may be input to the ECU 25. Then, the ECU 25 is configured to set a shift speed in accordance with an operation mode selected by the driver, subsequently output a signal corresponding to the set shift speed to the aforementioned respective clutches C1, C2, C3 and C4 and the aforementioned respective brakes B1 and B2, and output a signal based on a required driving force corresponding to an accelerator opening degree or the like to the engine 2, in more concrete terms, a device that controls the opening degree of a throttle valve.

As described above, according to this configuration, shifting is carried out without driver intervention in the automatic operation mode. Therefore, a shock that is not expected by the driver or a shock of a magnitude that is not expected by the driver may occur. On the other hand, in the manual operation mode, shifting is carried out as a result of an operation of the accelerator by the driver, an operation of a brake by the driver or the like. Therefore, even when a shock occurs as a result of shifting, the driver expects the occurrence of the shock. Accordingly, the control apparatus for this vehicle 1 is configured to carry out shifting in consideration of shifting responsiveness and fuel consumption while permitting the occurrence of a shock resulting from shifting to some extent when the manual operation mode is selected, and is configured to carry out shifting while attaching higher priority to reduction of a shock resulting from shifting when the automatic operation mode is selected than when the manual operation mode is selected.

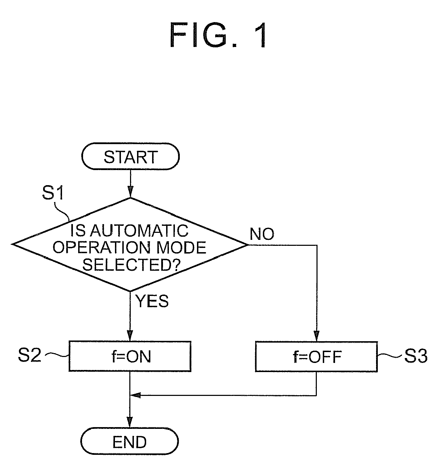

FIG. 1 is a flowchart for illustrating the control example. The routine of this flowchart is repeatedly executed at intervals of a predetermined time. In the control example shown in FIG. 1, it is first determined whether the selected operation mode is the automatic operation mode (step S1). The determination in this step S1 can be made based on a signal of the switch for making a changeover between the operation modes, or depending on whether or not a flag for carrying out the automatic operation mode is established in another type of control that is executed by the ECU 25. If the selected operation mode is the automatic operation mode and the result of the determination in step S1 is positive, a flag for executing shifting limit control for reducing a shock resulting from shifting is turned ON (step S2). On the contrary, if the selected operation mode is the manual operation mode and the result of the determination in step S1 is negative, the flag for executing the aforementioned shifting limit control is turned OFF (step S3). That is, the same control as known shifting control is executed. Incidentally, as will be described below, the shifting limit control is designed to reduce the rate of change in driving force resulting from shifting, to reduce the transmitted torque capacity of the torque converter clutch TC at the time of shifting, and/or to change the condition for starting shifting such that the frequency of shifting decreases, etc.

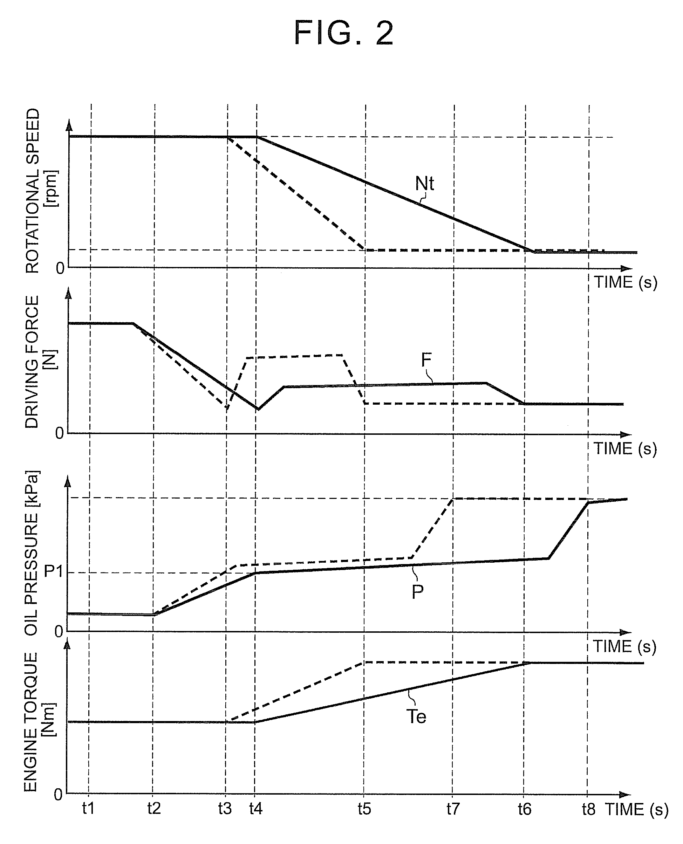

An example of shifting control for reducing the rate of change in driving force resulting from the aforementioned shifting will be described. FIG. 2 includes time charts for illustrating an example of the control, and shows how a rotational speed of the turbine shaft 5 (hereinafter referred to as a turbine rotational speed) Nt, a driving force F, an oil pressure P of the engagement devices to be engaged at the time of shifting, and an output torque Te of the engine 2 change when an upshift from a predetermined shift speed to a target shift speed is performed. Incidentally, solid lines indicate that the automatic operation mode is selected, and broken lines indicate that the manual operation mode is selected. In the example shown in FIG. 2, a determination on the performance of an upshift from a predetermined shift speed to a target shift speed is first made at a time point t1.

When it is determined that shifting should be carried out in such a manner, the oil pressure P of the engagement devices equivalent to "the first engagement device" in the embodiment of this disclosure starts to be increased (at a time point t2). That is, the transmitted torque capacity of the engagement devices starts to be increased. In concrete terms, the oil pressure of the third clutch C3 is increased in performing an upshift from the third forward speed to the fourth forward speed. Incidentally, the oil pressure of other engagement devices to be engaged in setting the predetermined shift speed and released in setting the target shift speed starts to be reduced before a time point t2, and the driving force F starts to decrease in accordance with the transmitted torque capacity of those engagement devices. The rate of increase in the oil pressure P of the engagement devices in this case is controlled to be lower when the automatic operation mode is selected than when the manual operation mode is selected. The rate of change is set in consideration of the durability or the like of the engagement devices.

Then, when the oil pressure P of the engagement devices increases to the predetermined oil pressure P1, the turbine rotational speed Nt starts to decrease (at a time point t3 and a time point t4). Incidentally, in the example shown in FIG. 2, the turbine rotational speed Nt is shown in such a manner as to rectilinearly change for the sake of convenience, but substantially changes at an accelerated rate immediately after starting to increase and immediately before decreasing to a constant value. An inertia torque corresponding to the rate of change in the turbine rotational speed Nt (the rate of change in the rotational speed of the engine 2) is transmitted to the driving wheels, so the driving force F increases. The output (i.e., the power) of the engine 2 is made constant, so the output torque Te of the engine 2 increases as the turbine rotational speed Nt decreases. Furthermore, at and after the time point t3 and the time point t4, the rate of change in the oil pressure P of the engagement devices is made lower than a previous rate of change and then is increased. The driving force F is set in accordance with the aforementioned inertia torque, the output torque Te of the engine 2, and the transmitted torque capacity of the engagement devices. Therefore, in the example shown in the drawing, the driving force F when the automatic operation mode is selected is smaller than the driving force F when the manual operation mode is selected.

Subsequently, when the turbine rotational speed Nt decreases to a rotational speed that is obtained from the vehicle speed and the speed ratio of the target shift speed (at a time point t5 and a time point t6), the oil pressure P of the engagement devices is increased to an oil pressure set in advance so as to prevent the engagement devices from slipping (at a time point t7 and a time point t8). At the time point t7 and the time point t8, the engagement device has already been engaged without slipping, so the rate of change in the oil pressure P can be appropriately set. At and after the time point t5 and the time point t6, the turbine rotational speed Nt is constant, so consequently, the output torque Te of the engine 2 is also constant.

As described above, the time that is needed to carry out shifting when the automatic operation mode is selected is controlled to be longer than the time that is needed to carry out shifting when the manual operation mode is selected. On the other hand, the amount of change in the driving force F resulting from shifting, in more concrete terms, the difference between the driving force F upon the start of shifting and the driving force F upon the end of shifting is constant. Accordingly, the rate of change in driving force resulting from shifting is lower in the automatic operation mode than in the manual operation mode. Thus, the occurrence of a shock that is not expected by the driver can be reduced or eliminated, and as a result, the driver may not feel discomfort.

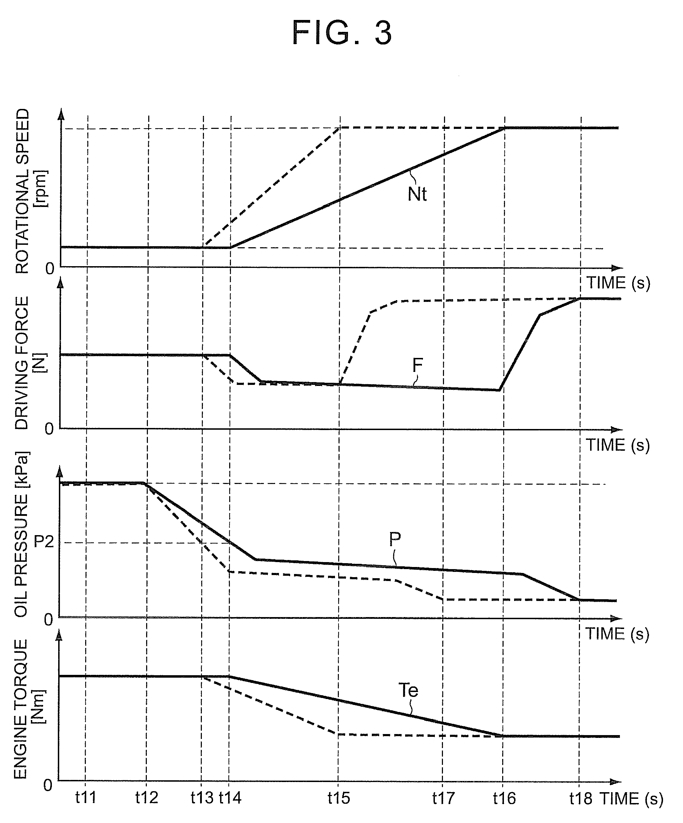

FIG. 3 shows how the turbine rotational speed Nt, the driving force F, the oil pressure P of the engagement devices to be released at the time of shifting, and the output torque Te of the engine 2 change when a downshift from a predetermined shift speed to a target shift speed is performed. Solid lines indicate that the automatic operation mode is selected. Broken lines indicate that the manual operation mode is selected. In the example shown in FIG. 3, a determination on the performance of a downshift from a predetermined shift speed to a target shift speed is first made at a time point t11.

If it is determined that shifting should be carried out in such a manner, the oil pressure P of the engagement devices equivalent to "the first engagement device" in the embodiment of this disclosure then starts to be reduced (at a time point t12). In concrete terms, when a downshift from the fourth forward speed to the third forward speed is performed, the oil pressure of the fourth clutch C4 is reduced. The rate of decrease in the oil pressure P of the engagement devices in this case is controlled to be lower when the automatic operation mode is selected than when the manual operation mode is selected. The rate of change is set in consideration of the durability of the engagement devices and the like.

Then, when the oil pressure P of the engagement devices decreases to a predetermined oil pressure P2, the turbine rotational speed Nt starts to increase (at a time point t13 and a time point t14). In the example shown in FIG. 3 as well as the example shown in FIG. 2, the turbine rotational speed Nt is shown in such a manner as to rectilinearly change for the sake of convenience. The driving force F decreases as the oil pressure P of the engagement devices decreases. The rate of decrease in the oil pressure P of the engagement devices is so controlled as to decrease after the lapse of a predetermined time from the time point t13 and the time point t14. This is because of the purpose of restraining the rate of change in the turbine rotational speed Nt from becoming excessively high.

Subsequently, when the turbine rotational speed Nt increases to a rotational speed that is obtained from the vehicle speed and the speed ratio of the target shift speed (at a time point t15 and a time point t16), the oil pressure is then reduced to an oil pressure set in advance so as to prevent the engagement devices from transmitting any torque (at a time point t17 and a time point t18). The rate of change in the turbine rotational speed Nt changes at the time point t15 and the time point t16, so the driving force F increases in accordance with the rate of change. At and after the time point t15 and the time point t16, the turbine rotational speed Nt is constant, so consequently, the output torque Te of the engine 2 is also constant.

As described above, the time that is needed for shifting when the automatic operation mode is selected is controlled to be longer than the time that is needed for shifting when the manual operation mode is selected. On the other hand, the amount of change in the driving force F resulting from shifting, in more concrete terms, the difference between the driving force F upon the start of shifting and the driving force F upon the end of shifting is constant. Accordingly, the rate of change in the driving force F resulting from shifting is lower in the automatic operation mode than in the manual operation mode. Thus, the occurrence of a shock that is not expected by the driver can be reduced or eliminated, and as a result, the driver may not feel discomfort.

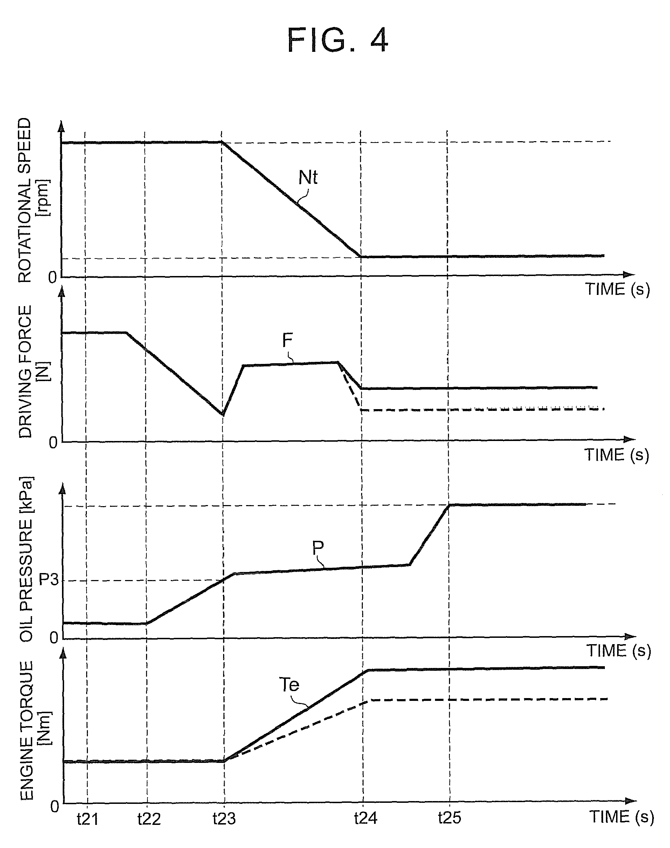

Next, a control example for reducing a shock resulting from shifting while holding the shifting responsiveness when the automatic operation mode is selected identical to the shifting responsiveness when the manual operation mode is selected will be described. FIG. 4 includes time charts for illustrating an example of the control. FIG. 4 shows how the turbine rotational speed Nt, the driving force F, the oil pressure P of the engagement devices to be engaged at the time of shifting, and the output torque Te of the engine 2 change when an upshift from a predetermined shift speed to a target shift speed is performed. Solid lines indicate that the automatic operation mode is selected, and broken lines indicate that the manual operation mode is selected. In the example shown in FIG. 14, a determination on the performance of an upshift from the predetermined shift speed to the target shift speed is first made at a time point t21.

If it is determined that shifting should be carried out in such a manner, the oil pressure P of the engagement devices then starts to be increased (at a time point t22). Incidentally, at or before the time point t22, the oil pressure of other engagement devices to be engaged in setting the predetermined shift speed and released in setting the target shift speed starts to be reduced, and the driving force F starts to decrease in accordance with the transmitted torque capacity of those other engagement devices. The rate of increase in the oil pressure P of the engagement devices in this case does not differ depending on whether the automatic operation mode or the manual operation mode is selected.

Then, when the oil pressure P of the engagement devices increases to a predetermined oil pressure P3, the turbine rotational speed Nt starts to decrease (at a time point t23). In the example shown in FIG. 4 as well as the example shown in FIG. 2, the turbine rotational speed Nt is shown in such a manner as to rectilinearly change for the sake of convenience. An inertia torque corresponding to the rate of change in the turbine rotational speed Nt (i.e., the rate of change in the rotational speed of the engine 2) is transmitted to the driving wheels, so the driving force F increases. In the example shown in FIG. 4, the output of the engine 2 is increased when the automatic operation mode is selected. On the other hand, the turbine rotational speed Nt changes in accordance with the transmitted torque capacity of the engagement devices and the vehicle speed. Therefore, in the example shown in the drawing, the turbine rotational speed Nt decreases at the same rate of change in both the operation modes. Accordingly, the output torque of the engine 2 is larger when the automatic operation mode is selected than when the manual operation mode is selected.

Furthermore, the magnitude of the driving force F is set in accordance with the aforementioned inertia torque, the output torque Te of the engine 2, and the transmitted torque capacity of the engagement devices. Therefore, even when the output torque Te of the engine 2 increases, when the sum of the inertia torque and the output torque Te of the engine 2 is equal to or larger than the transmitted torque capacity of the engagement devices, the magnitude of the driving force F is set in accordance with the transmitted torque capacity of the engagement devices. Accordingly, after the time point t23, the driving force F is the same in both the operation modes. On the other hand, at and after the time point t23, the rate of change in the oil pressure P of the engagement devices is made lower than a previous rate of change. Accordingly, when the transmitted torque capacity of the engagement devices becomes larger than the sum of the inertia torque and the output torque of the engine 2, a difference arises in the driving force F in accordance with the difference in the output torque of the engine 2. Therefore, in the example shown in the drawing, a difference arises in the driving force F as soon as the turbine rotational speed Nt decreases more or less to a rotational speed that is obtained from the vehicle speed and the speed ratio of the target shift speed.

Subsequently, when the turbine rotational speed Nt decreases to the rotational speed that is obtained from the vehicle speed and the speed ratio of the target shift speed (at a time point t24), the oil pressure is then increased to an oil pressure set in advance so as to prevent the engagement devices from slipping (at a time point t25). Incidentally, at and after the time point t24, the turbine rotational speed Nt is constant, so consequently, the output torque Te of the engine 2 is also constant. When the automatic operation mode is selected, the output torque Te of the engine 2 is gradually reduced to a predetermined output torque after the completion of shifting.

As described above, the time that is need for shifting when the automatic operation mode is selected is the same as the time that is needed for shifting when the manual operation mode is selected. On the other hand, the amount of change in the driving force F, in more concrete terms, the difference between the driving force F upon the start of shifting and the driving force F upon the end of shifting when the automatic operation mode is selected is smaller than the amount of change in the driving force F when the manual operation mode is selected. Accordingly, the rate of change in the driving force F resulting from shifting when the automatic operation mode is selected is lower than the rate of change in the driving force F resulting from shifting when the manual operation mode is selected. Therefore, when the automatic operation mode is selected, the occurrence of a shock that is not expected by the driver can be suppressed, and as a result, a feeling of discomfort can be avoided.

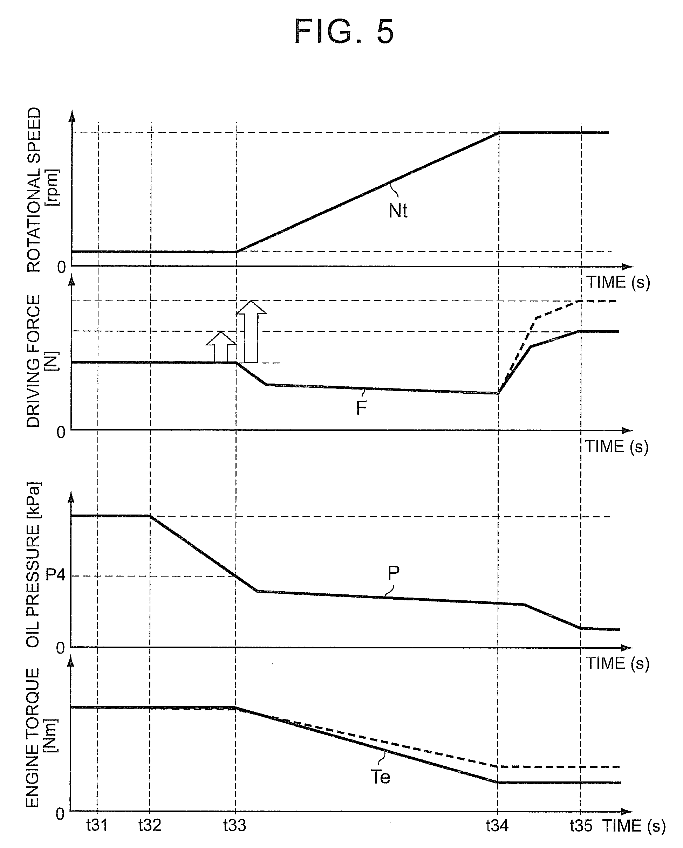

FIG. 5 shows how the turbine rotational speed Nt, the driving force F, the oil pressure P of the engagement devices to be released at the time of shifting, and the output torque Te of the engine 2 change when a downshift from a predetermined shift speed to a target shift speed is performed. Solid lines indicate that the automatic operation mode is selected, and broken lines indicate that the manual operation mode is selected. In the example shown in FIG. 5, a determination on the performance of a downshift from the predetermined shift speed to the target shift speed is first made at a time point t31.

If it is determined that shifting should be carried out in such a manner, the oil pressure P of the engagement devices starts to decrease (at a time point t32). Then, when the oil pressure P of the engagement devices decreases to a predetermined oil pressure P4, the turbine rotational speed Nt starts to increase (at a time point t33). Incidentally, in the example shown in FIG. 5 as well as the example shown in FIG. 2, the turbine rotational speed Nt is shown in such a manner as to rectilinearly change for the sake of convenience. The driving force F decreases as the oil pressure P of the engagement devices decreases. Incidentally, the rate of decrease in the oil pressure P of the engagement devices is so controlled as to decrease after the lapse of a predetermined time from the time point t33. This is because of the purpose of restraining the rate of change in the turbine rotational speed Nt from becoming excessively high. Furthermore, when the automatic operation mode is selected, the output of the engine 2 is reduced at the time point t33. On the other hand, the oil pressure P of the engagement devices is reduced at the same rate of change regardless of the selected operation mode, so consequently, the turbine rotational speed Nt also increases at the same rate of change regardless of the selected operation mode. Accordingly, the output torque Te of the engine 2 when the automatic operation mode is selected is smaller than the output torque Te of the engine 2 when the manual operation mode is selected.

Subsequently, when the turbine rotational speed Nt increases to a rotational speed that is obtained from the vehicle speed and the speed ratio of the target shift speed (at a time point t34), the oil pressure is then reduced to an oil pressure set in advance so as to prevent the engagement devices from transmitting any torque (at a time point t35). Incidentally, the rate of change in the turbine rotational speed Nt changes at the time point t34, so the driving force F increases in accordance with the rate of change. As described above, the driving force F is set based on the inertia torque, the output torque Te of the engine 2, and the transmitted torque capacity of the engagement devices. Accordingly, at the time point t34, the transmitted torque capacity of the engagement devices to be engaged to set the target shift speed has increased. Thus, at and after the time point t34, the driving force F when the automatic operation mode is selected is smaller than the driving force F when the manual operation mode is selected. Incidentally, at and after the time point t34, the turbine rotational speed Nt is constant, so consequently, the output torque Te of the engine 2 is also constant.

As described above, the time that is needed for shifting when the automatic operation mode is selected is the same as the time that is needed for shifting when the manual operation mode is selected. On the other hand, the amount of change in the driving force F, in more concrete terms, the difference between the driving force F upon the start of shifting and the driving force F upon the end of shifting when the automatic operation mode is selected is smaller than the amount of change in the driving force F when the manual operation mode is selected. Accordingly, the rate of change in the driving force F resulting from shifting when the automatic operation mode is selected is lower than the rate of change in the driving force F resulting from shifting when the manual operation mode is selected. Therefore, when the automatic operation mode is selected, the occurrence of a shock that is not expected by the driver can be suppressed, and as a result, a feeling of discomfort can be avoided.

The amount of change in the rotational speed of the engine 2 resulting from shifting is set based on the product of the vehicle speed and the amount of change in speed ratio. Therefore, the amount of change in the rotational speed of the engine 2 decreases as the vehicle speed decreases. Accordingly, at the time of so-called coast-down when a downshift is performed in coasting while decelerating with engine brake in effect, the rotational speed of the engine 2 at which the downshift is performed is reduced. Thus, the amount of change in the rotational speed of the engine 2 resulting from shifting can be reduced, and as a result, the amount of change in the driving force F can be reduced. The engine braking force increases as the rotational speed of the engine 2 increases. On the other hand, at the time of shifting, the driving force F temporarily decreases due to the inevitable emergence of a so-called inertia phase. Accordingly, the amount of change in the driving force F in a shifting transition period can be reduced by reducing the rotational speed of the engine 2 at which the downshift is performed.

Therefore, this control apparatus is configured to start coast-down based on the rotational speed of the engine 2, and sets the threshold of the rotational speed of the engine 2 for starting the coast-down smaller when the automatic operation mode is selected than when the manual operation mode is selected. Incidentally, the rotational speed of the engine 2 is equal to the turbine rotational speed Nt due to engagement of the torque converter clutch TC. Therefore, in the following description, the rotational speed of the engine 2 may be referred to as the turbine rotational speed Nt.

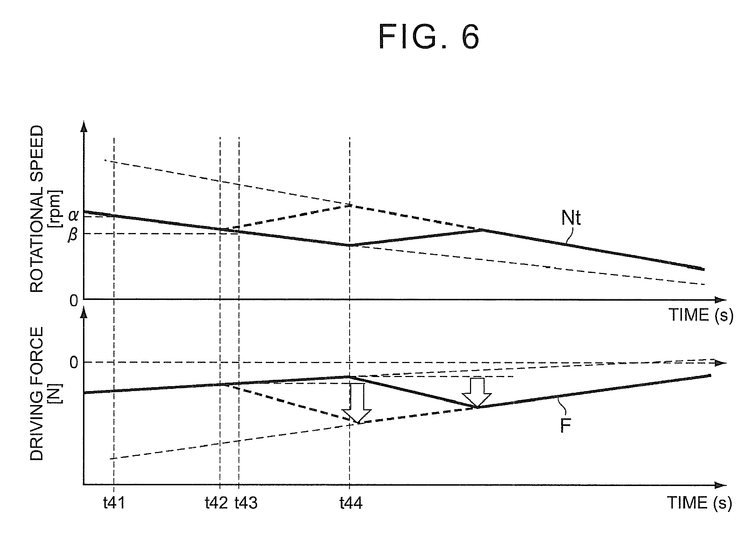

FIG. 6 shows how the turbine rotational speed Nt and the driving force F change when the control is executed. Incidentally, solid lines indicate changes when the automatic operation mode is selected, and broken lines indicate changes when the manual operation mode is selected. In the example shown in FIG. 6, when the manual operation mode is selected, the turbine rotational speed Nt decreases below a first threshold α, so a determination on the performance of a downshift is made. This first threshold α is a value that is set in advance to restrain the turbine rotational speed Nt from excessively decreasing, and is set in consideration of various conditions such as the rotational speed for suppressing the occurrence of engine stall and the like. Accordingly, when the manual operation mode is selected, coast-down is started as soon as the turbine rotational speed Nt decreases below the first threshold α (at a time point t41). That is, the engagement devices for setting a shift speed before shifting are released, and the engagement devices for setting a shift speed after shifting are engaged. Then, when the engagement pressure of the engagement devices to be engaged increases to a predetermined engagement pressure, the turbine rotational speed Nt starts to increase (at a time point t42).

On the other hand, when the automatic operation mode is selected, there is adopted a configuration in which a downshift is started on the condition that the turbine rotational speed Nt decrease to a second threshold β that is smaller than the first threshold α. Accordingly, as soon as the turbine rotational speed Nt decreases below the second threshold β (at a time point t43), coast-down is started, and the turbine rotational speed Nt then starts to increase (at a time point t44). That is, coast-down is started later than when the manual operation mode is selected, in other words, at a lower vehicle speed than in the manual operation mode. Incidentally, in the example shown in FIG. 6, the control in the shifting transition period is the same regardless of whether the automatic operation mode or the manual operation mode is selected. Accordingly, the time that is needed from the start of coast-down to the end thereof is substantially the same regardless of whether the automatic operation mode or the manual operation mode is selected.

Therefore, the amount of change in the rotational speed of the engine 2 can be reduced, and as a result, the amount of change in the driving force F can be reduced by making the threshold of the turbine rotational speed Nt at which coast-down is started as described above smaller when the automatic operation mode is selected than when the manual operation mode is selected. As described above, the time needed for shifting is substantially the same regardless of the operation mode. Therefore, the rate of change in the driving force F can be made lower when the automatic operation mode is selected than when the manual operation mode is selected. As a result, when the automatic operation mode is selected, the occurrence of a shock that is not expected by the driver can be suppressed, and a feeling of discomfort can be avoided.

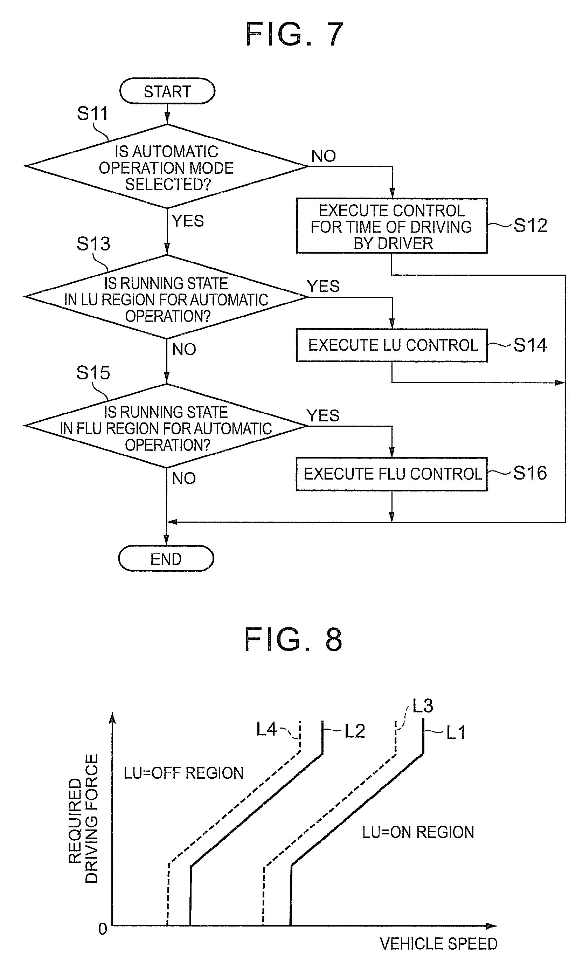

This control apparatus may be configured such that the inertia torque that is generated through shifting is unlikely to be transmitted to the driving wheels when the automatic operation mode is selected. In concrete terms, the control apparatus may be configured to prevent the inertia torque from being transmitted to the driving wheels by reducing the transmitted torque capacity of the aforementioned torque converter clutch TC at the time of shifting, and to absorb vibrations resulting from a change in the turbine rotational speed Nt or the like. FIG. 7 is a flowchart for illustrating an example of the control. The routine of the flowchart shown in this FIG. 7 is configured to be repeatedly executed at intervals of a predetermined time when the torque converter clutch TC is released. It is first determined whether or not the automatic operation mode is selected (step S11). As is the case with step S1 in the control example shown in FIG. 1, the determination in this step S11 can be made based on a signal of the switch for making a changeover between the operation modes, or depending on whether or not a flag for carrying out the automatic operation mode is established in another type of control that is executed by the ECU 25.

If the manual operation mode is selected and the result of the determination in step S 11 is negative, the control of the torque converter clutch TC in the manual operation mode is executed, and this routine is ended (step S12). The control of the torque converter clutch TC in this step S12 can be executed in the same manner as conventionally known control, and is the control that takes shifting responsiveness, fuel consumption and the like into consideration. On the contrary, if the automatic operation mode is selected and the result of the determination in step S 11 is positive, it is determined whether or not the running state corresponding to the required driving force and the vehicle speed is in a lockup (LU) region in a changeover map of the torque converter clutch TC that is set for the automatic operation mode (step S 13).

FIG. 8 shows an example of the map in this step S13. The map shown in FIG. 8 is divided into the lockup region where the torque converter clutch TC is completely engaged in accordance with the required driving force and the vehicle speed, a non-lockup region where the torque converter clutch TC is completely released, and slip regions where the torque converter clutch TC has a predetermined slip amount. In the example shown in FIG. 8, a first changeover line L1 for changing over the torque converter clutch TC from its released state to its engaged state when the automatic operation mode is selected is set on a higher vehicle speed side than a second changeover line L2 for changing over the torque converter clutch TC from its released state to its engaged state when the manual operation mode is selected. By the same token, a third changeover line L3 for changing over the torque converter clutch TC from its engaged state to its released state when the automatic operation mode is selected is set on a higher vehicle speed side than a fourth changeover line L4 for changing over the torque converter clutch TC from its engaged state to its released state when the manual operation mode is selected. That is, the region where the torque converter clutch TC is engaged is made smaller when the automatic operation mode is selected than when the manual operation mode is selected.

A region between the first changeover line L1 and the third changeover line L3, and a region between the second changeover line L2 and the fourth changeover line L4 are set as the slip regions. That is, if it is assumed that the required driving force is constant when the manual operation mode is selected, the non-lockup region, the slip regions and the lockup region are set in this order as the vehicle speed increases. By the same token, if it is assumed that the required driving force is constant when the automatic operation mode is selected, the non-lockup region, the slip regions and the lockup region are set in this order as the vehicle speed increases.

If a determination in step S 13 is made in accordance with the map set as described above, the running state is in the lockup region when the automatic operation mode is selected, and the result of the determination in step S 13 is positive, the control similar to conventionally known lockup control for engaging the torque converter clutch TC is executed (step S14). On the contrary, if the running state is not in the lockup region when the manual operation mode is selected and the result of the determination in step S 13 is negative, it is then determined whether or not the running state is in the slip (FLU) regions when the automatic operation mode is selected (step S 15).

If the running state is in the non-lockup region when the automatic operation mode is selected and the result of the determination in step S 15 is negative, this control is temporarily ended. That is, the torque converter clutch TC is kept released. On the other hand, if the running state is in the slip regions when the automatic operation mode is selected and the result of the determination in step S 15 is positive, the slip control configured for the automatic operation mode is executed (step S16). This slip control is configured to set the slip amount of the torque converter clutch TC larger than the slip control configured for the manual operation mode. This is because of the purpose of restraining the driving force more from changing as a result of an inertia torque or the like than in the manual operation mode.

As described above, the region where the torque converter clutch TC is engaged is made smaller when the automatic operation mode is selected than when the manual operation mode is selected. Thus, at a low shift speed where the speed ratio is relatively large, the torque converter clutch TC is released. Therefore, even when the torque changes as a result of an inertia torque or the like at the time of shifting at a low shift speed where a relatively large shock occurs due to shifting, the change in the torque can be absorbed, or vibrations resulting from the change in the torque can be absorbed. Furthermore, an effect similar to the foregoing can be obtained at the time of shifting in the slip regions, by increasing the slip amount. Accordingly, the occurrence of a shock resulting from shifting can be suppressed by executing control as described above.

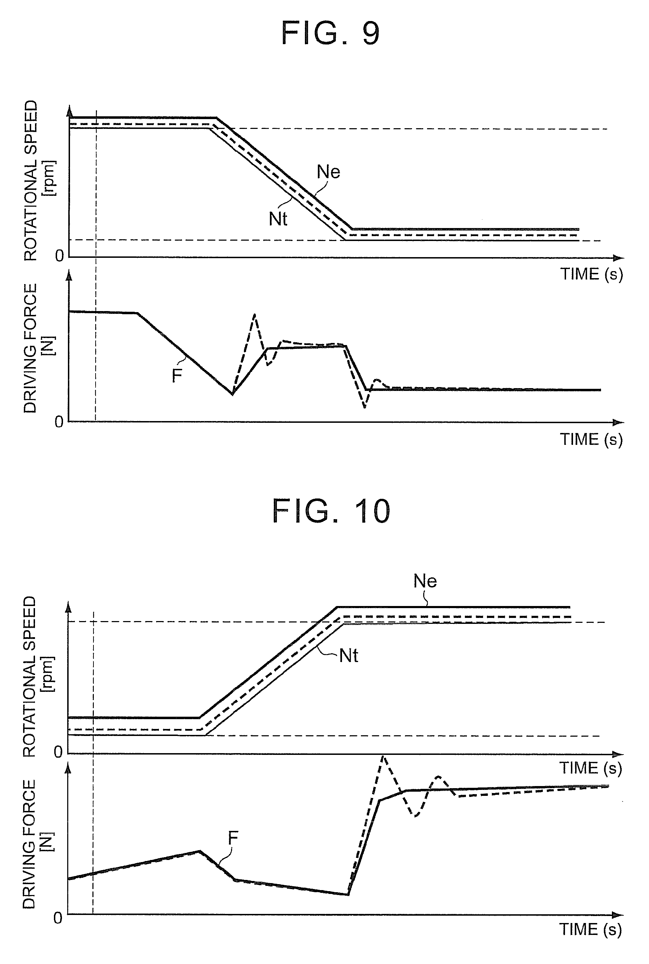

FIGS. 9 and 10 show examples in which the slip amount of the torque converter clutch TC is increased at the time of shifting when the automatic operation mode is selected. Incidentally, FIG. 9 shows how the engine rotational speed Ne, the turbine rotational speed Nt and the driving force F change when an upshift is performed. FIG. 10 shows how the engine rotational speed Ne, the turbine rotational speed Nt and the driving force F change when a downshift is performed. Solid lines indicate how the turbine rotational speed Nt and the driving force change when the automatic operation mode is selected. Broken lines indicate how the turbine rotational speed Nt and the driving force change when the manual operation mode is selected. The engine rotational speed Ne is made lower than the turbine rotational speed Nt by making the slip amount of the torque converter clutch TC larger when the automatic operation mode is selected than when the manual operation mode is selected, in performing an upshift as shown in FIG. 9. This remains unchanged regardless of whether or not shifting has ended.

On the other hand, in a shifting transition period, as soon as the rate of change in the turbine rotational speed Nt decreases, the driving force F increases. If the slip amount of the torque converter clutch TC is small in this case, fluctuations in the inertia torque of the engine 2 are likely to be transmitted to the driving wheels, and as a result, a shock or vibrations tend to be caused. Accordingly, in the manual operation mode as shown in the drawing, the driving force F increases or decreases while fluctuating in the shifting transition period. On the other hand, in the automatic operation mode, fluctuations in the inertia torque of the engine 2 are absorbed or reduced through the slipping of the torque converter clutch TC. Accordingly, when the automatic operation mode is selected, shifting can be carried out while the driving force F hardly fluctuates. As a result, the occurrence of a shock or vibrations corresponding to fluctuations in the driving force F can be suppressed, so a feeling of discomfort can be avoided.

The same holds true in performing a downshift as shown in FIG 10. As soon as the rate of change in the turbine rotational speed Nt decreases through shifting, the driving force F increases. If the slip amount of the torque converter clutch TC is small when the manual operation mode is selected, the driving force F fluctuates as a result of fluctuations in the inertia torque of the engine 2. On the other hand, if the slip amount of the torque converter clutch TC is large when the automatic operation mode is selected, fluctuations in the inertia torque of the engine 2 are absorbed or reduced through the slipping of the torque converter clutch TC. Accordingly, when the automatic operation mode is selected, shifting can be carried out while the driving force F hardly fluctuates. As a result, the occurrence of a shock or vibrations corresponding to fluctuations in the driving force F can be suppressed, so a feeling of discomfort can be avoided.

Incidentally, there may be adopted a configuration in which the torque converter clutch TC is subjected to slip control as soon as it is determined that shifting control should be started, with a view to suppressing the occurrence of a shock or vibrations at the time of shifting, even when the running state is in the lockup region when the automatic operation mode is selected.

In the manual operation mode, shifting is carried out as a result of driver intervention. Therefore, even when the external situation such as the running environment or the like changes, shifting is not carried out unless the operation by the driver changes. On the other hand, in the automatic operation mode, shifting is carried out based on the external situation such as the running environment or the like, so shifting may be carried out following changes in the external situation. If shifting is carried out in such a manner following the external situation, a downshift and an upshift are repeatedly performed to maintain the vehicle speed, for example, while running on a road surface where an upslope and a downslope alternate. The driving force F may change in response to such frequent shifting. In this case, a shock may occur, so the driver may develop a feeling of discomfort.

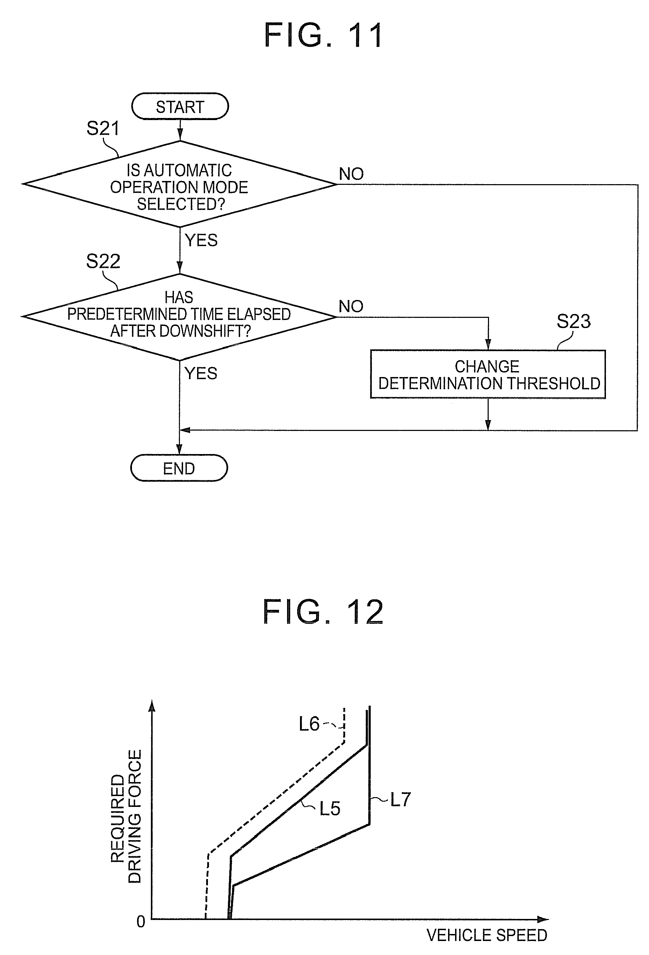

Therefore, this control apparatus is configured to restrain the speed ratio from being frequently changed. FIG 11 shows a flowchart for illustrating an example of the control. Incidentally, the routine of the flowchart shown in FIG. 11 is repeatedly executed at intervals of a predetermined time. In the example shown in FIG. 11, it is first determined whether or not the automatic operation mode is selected (step S21). As is the case with step S1 in the control example shown in FIG. 1, the determination in this step S21 can be made based on a signal of the switch for making a changeover between the operation modes, or depending on whether or not the flag for carrying out the automatic operation mode is established in another type of control that is executed by the ECU 25.

If the manual operation mode is selected and the result of the determination in step S21 is negative, this routine is temporarily ended. On the contrary, if the automatic operation mode is selected and the result of the determination in step S21 is positive, it is determined whether or not a predetermined time set in advance has elapsed after the performance of a downshift (step S22). If the predetermined time or more has elapsed after the performance of the downshift and the result of the determination in step S22 is positive, this routine is temporarily ended directly. On the contrary, if the predetermined time has not elapsed after the performance of the downshift and the result of the determination in step S22 is negative, a determination threshold for an upshift is changed (step S23), and this routine is ended.

FIG. 12 shows a map for illustrating the determination threshold for the upshift. The example shown in FIG. 12 is configured to carry out shifting based on the vehicle speed and the required driving force. A first determination threshold L5 for making a determination on an upshift is indicated by a solid line, and a second determination threshold L6 for making a determination on a downshift is indicated by a broken line. A third determination threshold L7 for an upshift, which is changed in response to the negative result of the determination in step S22 in FIG. 11, is shown offset from the first determination threshold L5. In concrete terms, when the result of the determination in step S22 in FIG. 11 is negative, the third determination threshold L7 is set smaller than when the result of the determination in step S22 is positive, namely, smaller in required driving force than the first determination threshold L5 at a normal time. This is because of the purpose of preventing an upshift from being performed even when the required driving force slightly decreases after the performance of a downshift. Even when the required driving force slightly decreases after the downshift is thus performed, the driving force F can be output without performing an upshift.

On the other hand, when an upshift is simply prohibited until the lapse of a predetermined time, the braking force may increase due to an increase in pumping loss or the like resulting from the driving of the engine 2. Therefore, the third determination threshold L7 is set within such a range that the resistance force such as the pumping loss or the like does not become larger than the output torque of the engine 2.

If the result of the determination in step S22 in the control example shown in FIG. 11 is negative, an upshift is performed based on the third determination threshold L7 shown in FIG. 12. Accordingly, even when the required driving force decreases after the performance of a downshift, an upshift can be restrained from being immediately performed. Therefore, the occurrence of a shock resulting from frequent shifting can be suppressed, and a feeling of discomfort can be avoided. Incidentally, this control is preferably configured to restrain an upshift from being performed after the performance of a downshift with a view to reducing the frequency of shifting. This is because although the required driving force can be output when the speed ratio is large, the outputting of the required driving force may be impossible when the speed ratio is small.

As described above, in the automatic operation mode, the running route and the vehicle speed are planned, and the driving force F is controlled based thereon. Therefore, the gradient of the running route and the like are also detected. Therefore, the gradient of a route along which the vehicle is to run after the lapse of a predetermined time may be detected, and an upshift may be prohibited in advance from being performed when a downshift is supposed to be performed in running along the detected route.

## Claims

1. A control apparatus for a vehicle that includes an engine (2) and a transmission (3) that is coupled to the engine (2), the control apparatus **characterized by** comprising:
an ECU (25) that is configured to
change a speed ratio of the transmission (3) without driver intervention, when an automatic operation mode is selected,
change the speed ratio of the transmission (3) as a result of driver intervention, when a manual operation mode is selected, the automatic operation mode and the manual operation mode being selected by the driver, and
execute shifting limit control based on selection of the automatic operation mode, the shifting limit control being control for reducing a shock resulting from changing of the speed ratio of the transmission (3).

2. The control apparatus according to claim 1, **characterized in that**
the ECU (25) is configured to
execute the shifting limit control by making a rate of change in a first driving force lower than a rate of change in a second driving force,
the rate of change in the first driving force being a rate of change in a driving force resulting from changing of the speed ratio of the transmission (3) when the automatic operation mode is selected, and the rate of change in the second driving force being a rate of change in the driving force resulting from changing of the speed ratio of the transmission (3) at a time when the manual operation mode is selected.

3. The control apparatus according to claim 1 or 2, **characterized in that**
the ECU (25) is configured to
execute the shifting limit control by making a first time longer than a second time,
the first time being a time that is needed in changing the speed ratio of the transmission (3) when the automatic operation mode is selected, and the second time being a time that is needed in changing the speed ratio of the transmission (3) when the manual operation mode is selected.

4. The control apparatus according to any one of claims 1 to 3, **characterized in that** the transmission (3) includes a plurality of engagement devices, the plurality of the engagement devices changing a transmitted torque capacity, and
the ECU (25) is configured to
change the speed ratio of the transmission (3) by controlling a transmitted torque capacity of a first engagement device, the first engagement device being at least one of the plurality of the engagement devices, and
execute the shifting limit control by making a rate of change in a first transmitted torque capacity lower than a rate of change in a second transmitted torque capacity,
the rate of change in the first transmitted torque capacity being a rate of change in the transmitted torque capacity of the first engagement device in changing the speed ratio of the transmission (3) when the automatic operation mode is selected, and the rate of change in the second transmitted torque capacity being a rate of change in the transmitted torque capacity of the first engagement device in changing the speed ratio of the transmission (3) with the manual operation mode selected.

5. The control apparatus according to any one of claims 1 to 4, **characterized in that**
the ECU (25) is configured to
execute the shifting limit control by making an amount of change in a first driving force smaller than an amount of change in a second driving force,
the amount of change in the first driving force being an amount of change in the driving force in changing the speed ratio of the transmission (3) when the automatic operation mode is selected, and the amount of change in the second driving force being an amount of change in the driving force in changing the speed ratio of the transmission (3) with the manual operation mode selected.

6. The control apparatus according to any one of claims 1 to 5, **characterized in that**
the ECU (25) is configured to
execute the shifting limit control by making a first output torque of the engine (2) larger than a second output torque of the engine (2), and making a third output torque of the engine (2) smaller than a fourth output torque of the engine (2),
the first output torque being an output torque of the engine (2) in a process of performing an upshift for reducing the speed ratio of the transmission (3) with the automatic operation mode selected,
the second output torque being an output torque of the engine (2) in a process of performing the upshift with the manual operation mode selected,
the third output torque being an output torque of the engine (2) in a process of performing a downshift for increasing the speed ratio of the transmission (3) with the automatic operation mode selected, and
the fourth output torque being an output torque of the engine (2) in a process of performing the downshift with the manual operation mode selected.

7. The control apparatus according to any one of claims 1 to 6, **characterized in that**
the ECU (25) is configured to
make a determination on performance of a downshift for increasing the speed ratio of the transmission (3) based on a rotational speed of the engine (2), and
execute the shifting limit control by setting a first rotational speed of the engine (2) lower than a second rotational speed of the engine (2),
the first rotational speed being a rotational speed of the engine (2) for making a determination on performance of the downshift with the automatic operation mode selected, and the second rotational speed being a rotational speed of the engine (2) for making a determination on performance of the downshift with the manual operation mode selected.

8. The control apparatus according to any one of claims 1 to 7, **characterized in that**
the transmission (3) includes a torque converter (4) and a second engagement device (TC),
the torque converter (4) being provided between the engine (2) and a driving wheel and transmitting an output torque of the engine (2) to the driving wheel via a working fluid, and
the second engagement device (TC) being engaged to transmit the output torque of the engine (2) to the driving wheel without intermediary of the torque converter (4), and
the ECU (25) is configured to
make a changeover between engagement and release of the second engagement device (TC) based on a vehicle speed and a required driving force, and
execute the shifting limit control by making a changeover between the engagement and the release of the second engagement device (TC) at a higher vehicle speed than when the manual operation mode is selected.

9. The control apparatus according to any one of claims 1 to 7, **characterized in that**
the transmission (3) includes a torque converter (4) and a third engagement device (TC), the torque converter (4) being provided between the engine (2) and a driving wheel and transmitting an output torque of the engine (2) to the driving wheel via a working fluid, and the third engagement device (TC) being engaged to transmit the output torque of the engine (2) to the driving wheel without intermediary of the torque converter (4), and
the ECU (25) is configured to
change a transmitted torque capacity of the third engagement device (TC) based on a vehicle speed and a required driving force, and
execute the shifting limit control by making a third transmitted torque capacity lower than a fourth transmitted torque capacity,
the third transmitted torque capacity being a transmitted torque capacity of the third engagement device (TC) in a process of changing the speed ratio of the transmission (3) with the automatic operation mode selected, and the fourth transmitted torque capacity being a transmitted torque capacity of the third engagement device (TC) in a process of changing the speed ratio of the transmission (3) with the manual operation mode selected.

10. The control apparatus according to any one of claims 1 to 9, **characterized in that**
the ECU (25) is configured to
change the speed ratio of the transmission (3) in accordance with a required driving force, and execute the shifting limit control by reducing a threshold of the required driving force for a predetermined time set in advance after performing a downshift for increasing the speed ratio of the transmission (3),
the threshold being a threshold for making a determination on performance of an upshift for reducing the speed ratio of the transmission (3).

11. The control apparatus according to any one of claims 1 to 9, **characterized in that**
the ECU (25) is configured to
predict a speed ratio required of the transmission (3) after a predetermined time, and
execute the shifting limit control by refraining from performing an upshift for reducing the speed ratio of the transmission even when it is determined that the upshift should be performed before lapse of the predetermined time when the predicted speed ratio is a currently set speed ratio.
